# EUROPÄISCHE PATENTSCHRIFT

(11) **EP 2 446 097 B1**
(45) Veröffentlichungstag und Bekanntmachung des Hinweises auf die Patenterteilung: **25.02.2015**
(21) Anmeldenummer: 10724508.6
(22) Anmeldetag: 10.06.2010
(51) Int. Cl.: E04F 19/06

(54) **FUßBODENPROFILANORDNUNG**
FLOOR PROFILE ASSEMBLY
AGENCEMENT DE PROFILÉS DE SOL

(30) Priorität: 26.06.2009 DE 202009008870 U; 08.07.2009 DE 202009009407 U
(43) Veröffentlichungstag der Anmeldung: 02.05.2012
(73) Patentinhaber: Küberit Profile Systems GmbH & Co. KG, 58513 Lüdenscheid (DE)
(72) Erfinder: SONDERMANN, Frank, 57489 Drolshagen (DE)
(74) Vertreter: Peter, Julian
(86) Internationale Anmeldenummer: PCT/EP2010/058184
(87) Internationale Veröffentlichungsnummer: WO 2010/149502

(56) Entgegenhaltungen:
- EP-A2- 1 284 331
- WO-A1-01/20101
- DE-U1- 20 117 167
- DE-U1- 29 711 960

## Beschreibung

Die vorliegende Erfindung betrifft eine Fußbodenprofilanordnung, insbesondere zur Festlegung von Fußbodenbelägen, umfassend mindestens eine Profilleiste, die mindestens eine Halteeinrichtung aufweist.

Eine solche Anordnung gemäß Oberbegriff des Anspruchs 1 ist im Dokument WO 01/20101 A1 offenbart.

Aus der DE 201 17 167 U1 ist eine Fußbodenprofilanordnung, insbesondere zur Überbrückung einer Fuge in einem Fußbodenbelag, mit einem Basisprofil und einem auf dem Basisprofil montierbaren Abdeckprofil bekannt. Hierbei weist das Basisprofil einen im Wesentlichen waagrechten Schenkel zur Befestigung an einem Untergrund und zwei nach oben abstehende Schenkel auf. Das Abdeckprofil wird aus zwei seitlich abstehenden Abdeckflügeln, die die Fuge zweier aneinander stoßender Fußbodenbeläge überbrücken, und zwei nach unten abstehenden Stegen gebildet. Zur Befestigung eines Fußbodenbelages bzw. zur Überbrückung einer Fuge wird das Abdeckprofil dergestalt über dem Basisprofil angeordnet, dass die beiden nach unten abstehenden Stege die beiden nach oben abstehenden Schenkel des Basisprofils übergreifen. Aufgrund der Tatsache, dass Fußbodenprofilanordnungen als Meterware verkauft werden, ergibt sich das Problem der Bildung eines sauberen Stoßpunktes an den Schnittkanten der Profile. Für den Monteur kann es schwierig sein, zwei Fußbodenprofilanordnungen derart aneinander zu legen und aufeinander abzustimmen, dass die Schnittkanten der Profile bündig aneinander anliegen und kein Spalt verbleibt.

Ferner ist es bei früheren Fußbodenprofilanordnungen problematisch, wenn Schnittkanten zweier Fußbodenprofilanordnungen in einem Trittbereich mit hoher Belastung angeordnet sind, da sich die Profilleisten unterschiedlich verformen und mit der Zeit vom Bodenbereich abstehen können. Dies ist nicht nur unschön anzusehen, sondern birgt Verletzungsgefahren.

Daher ist es Aufgabe der Erfindung, eine Fußbodenprofilanordnung bereitzustellen, die eine schnelle und korrekte Vorabmontage der Profilleisten zueinander ermöglicht.

Ferner ist es Aufgabe der Erfindung, eine Fußbodenprofilanordnung bereitzustellen, die zumindest an ihren Schnittkanten eine höhere Stabilität aufweist.

Diese Aufgaben werden mit dem Gegenstand des unabhängigen Anspruchs 1 gelöst. Merkmale vorteilhafter Weiterbildungen der Erfindung ergeben sich aus den abhängigen Ansprüchen.

Bei einer vorteilhaften Ausgestaltung einer Fußbodenprofilanordnung, die insbesondere zur Festlegung von Fußbodenbelägen geeignet sein kann und mindestens eine Profilleiste umfasst, weist diese mindestens eine Halteeinrichtung auf, durch die ein erster Teilabschnitt eines Verbindungsmittels gehalten ist, wobei ein zweiter Teilabschnitt des Verbindungsmittels über einen Randbereich der Profilleiste in Längsrichtung zur Verbindung mit einer weiteren Profilleiste hervorsteht. Die Längsrichtung erstreckt sich hierbei senkrecht zu den Schnittkanten des Profils.

Hierbei kann unter einer Profilleiste jedes Bauteil verstanden werden, das geeignet ist, Abschlussbereiche von Bodenbelägen aufzunehmen. Profilleisten können beispielsweise ein im Wesentlichen rampen- oder H-förmiges Bauteil sein, so dass die gegenüberliegenden Schenkel eine kanalförmige Struktur bilden. So werden beispielsweise im Falle einer H-förmigen Profilleiste zwei U-förmige Kanäle zur Aufnahme von Bodenbelägen geschaffen, wobei sich die Kanäle eine Wand teilen.

Solche Profilleisten werden sowohl als Eckkantenprofile, Treppenkantenprofile, Kantenprofile, Winkelprofile, Übergangsprofile, Einfassprofile, Rampenprofile, Abschlussprofile, Sockelleisten als auch als Zierleisten eingesetzt.

In einer Ausgestaltung der Erfindung bei einem Winkelprofil ist vorteilhaft, neben den Verbindern zusätzlich mindestens einen Winkelverbinder zu verenden. Unter Winkelverbinder wird jedes Bauteil verstanden, das geeignet ist zwei oder mehrere Profilleisten zu verbinden, die zueinander in einem vordefinierten Winkel stehen. Der häufigste Fall ist ein Winkel zwischen zwei Profilleisten von 90 Grad, wobei die Profilleisten jeweils im 45 Grad-Winkel abgeschnitten und aneinandergefügt wurden. Der Winkelverbinder ermöglicht eine formschlüssige Verbindung von Winkelprofilen an den Schnittkanten. Günstig ist auch, dass der Winkelverbinder bereits ab Werk eingebracht werden kann und somit vorgefertigte, mit einem Winkelverbinder zusammengefügte Winkelelemente angeboten werden können.

Der Winkelverbinder kann einteilig ausgebildet und mit einem Befestigungsmittel wie Schrauben, vorzugsweise Madenschrauben an der bzw. den Profilleisten befestigt werden. Zu diesem Zweck kann die Profilleiste ferner Mittel aufweisen, die dem Befestigungsmittel eine ebene Anlagefläche bieten. Bei einer rampenförmigen Profilleiste würde die Schraube an der Schräge abrutschen und verkanten. Deshalb wird als Mittel eine Art Wulst an der Schräge vorgesehen, die der Schraube ein senkrechtes Abstützen ermöglicht und ein Verkanten verhindert. Der Winkelverbinder kann sich beim Anziehen der Schraube an an der Profilleiste vorgesehenen Schenkeln abstützen.

Der Vorteil einer erfindungsgemäßen Fußbodenprofilanordnung liegt zum einen in der vereinfachten Montage zum anderen in der Einsparung von Montage- und Materialkosten. Denn mittels des Verbindungsmittels dessen erster Teilabschnitt in einer Profilleiste gehalten ist, und dessen zweiter Teilabschnitt über einen Randbereich der Profilleiste in Längsrichtung hervorsteht, kann auf einfache Weise an dem hervorstehenden Teilabschnitt bereits eine erste Verbindung zu einer weiteren Profilleiste hergestellt werden, ohne dass diese endgültig aneinander befestigt sind.

Auch ist günstig, dass die Verbindungsmittel bei endgültiger Befestigung der Profilleisten aneinander eine erhöhte Lastaufnahme gewährleisten können. Es können hierbei höhere mechanische Kräfte, wie Normalkräfte und Biegemomente, von einer auf die sich anschließende Profilleiste übertragen werden. Somit wird nicht nur eine Kraftweiterleitung, sondern auch eine Kraftverteilung gewährleistet. Dies erhöht die mechanische Belastbarkeit, und verringert den mechanischen Verschleiß.

Aufgrund der Erhöhung der Aufnahmekapazität von Kräften und Momenten kann eine Profilleiste einen größeren Höhenunterschied zwischen zwei Bodenbelägen überwindbar gestalten, da die in die Profilleiste einbringbaren Verbindungsmittel die mechanische Stabilität erhöhen. Dementsprechend kann auch mittels der Verbindungsmittel ein größerer Trittbereich überbrückt werden, da auch hier die Verbindungsmittel die Kräfte aufnehmen und an die Auflage verteilen bzw. weiterleiten können.

Ferner ist vorteilhaft, dass das am Stoßpunkt bzw. an den anliegenden Schnittkanten zweier Fußbodenprofilanordnungen nach einiger Zeit häufig auftretende Aufstellen der aneinander stoßenden Enden der Fußbodenprofilanordnungen verhindert werden kann. Dieses Verhalten ist das Resultat plastischer Verformungen entsprechend den Lastmomenten, hervorgerufen durch die tagtägliche Benutzung. Mit dem Einsatz mindestens eines Verbindungsmitteln kann dieses Verhalten vermieden und die Belastung aus Biege- und Torsionsmomenten sowie aus Normalkräften von einer Profilleiste auf eine sich anschließende weitergeleitet und auch verteilt werden.

Bei einer Ausgestaltung der Fußbodenprofilanordnung sieht die Profilleiste zwei oder mehrere Halteeinrichtungen vor, die jeweils ein Verbindungselement halten. Dies ist besonders dann von Vorteil, wenn zwei längere Profilleisten miteinander verbunden werden, da die Belastung aus Biege- und Torsionsmomenten sowie aus Normalkräften auf zwei oder mehrere Verbindungsmittel verteilt wird. Somit werden für jedes einzelne Verbindungsmittel die Haltemomente bzw. Haltekräfte halbiert bzw. verringert und folglich die mechanische Stabilität des Gesamtsystems erhöht. Auch bei kurzen Profilleisten ist die Wirkung insbesondere gegen ein mögliches Wackeln vorteilhaft.

Des Weiteren weisen erfindungsgemäß die Verbindungsmittel eine identische Form auf, wobei das erste Verbindungsmittel vertikal und das zweite horizontal in der jeweiligen Profilleiste angeordnet ist. Dabei ist vorteilhaft, dass beispielsweise im Falle einer rampenförmigen Fußbodenprofilanordnung das Verbindungsmittel quaderförmig ausgebildet und sowohl vertikal als auch horizontal innerhalb einer rampenförmigen Profilleiste angeordnet werden kann. So wird bevorzugt im spitzen vorderen Bereich einer rampenförmigen Profilleiste eine horizontale Orientierung des Verbindungsmittels bevorzugt, wohingegen im sich öffnenden Bereich eine vertikale Orientierung möglich ist. Aufgrund einer solchen Ausgestaltung ist es möglich, Produktionskosten für die Verbindungsmittel niedrig zu halten, da nur eine einzige Form eines Verbindungsmittels zur Verbindung zweier Profilleisten notwendig ist. Es auch möglich, zwei gleich orientierte Verbindungsmittel nebeneinander, oder übereinander zur Verbindung anzubringen.

Des Weiteren bieten die Orientierungsmöglichkeiten der Verbindungsmittel innerhalb einer Profilleiste unterschiedlich mechanische Vorteile. So ist es vorteilhaft, wenn die Verbindung zweier Profilleisten durch Trittlast auf Biegung beansprucht wird, das Verbindungsmittel an der Profilleiste so zu positionieren, dass das betreffende Widerstandsmoment des Verbindungsmittels größtmöglich in Biegerichtung orientiert ist. Dies entlastet nicht nur das Verbindungsmittel, sondern erhöht gleichzeitig die Stabilität am Stoßpunkt der Profilleisten.

Bevorzugterweise kann die mindestens eine Halteeinrichtung aus Stegen und/oder Schenkeln und/oder einer Schwalbenschwanz-Halteeinrichtung gebildet sein, wobei die mindestens eine Halteeinrichtung Halteflächen zum Halten des mindestens einen Verbindungsmittels bereitstellt. Eine derartige Ausbildung der mindestens einen Halteeinrichtung sorgt dafür, dass die mindestens eine Halteeinrichtung das mindestens eine Verbindungsmittel kraft- und formschlüssig umgreift.

Bei einer Ausbildung der mindestens einen Halteeinrichtung aus Schenkeln bzw. Stegen kann das mindestens eine Verbindungsmittel in den von den Schenkeln bzw. von den Stegen gebildeten Kanal eingebracht werden. Hierbei ist es günstig, dass das Verbindungsmittel in seiner Form und Größe auf mindestens die Größe des derart gebildeten Kanals abgestimmt ist. Somit kann ein Kraft- und Formschluss durch die das Verbindungsmittel übergreifenden Schenkel/Stege gewährleistet werden. Erst mittels dieses Kraft- und Formschlusses können auftretende Biegemomente am Stoßpunkt zweier Profilleisten erfolgreich von der einen Profilleiste auf die andere unmittelbar oder mittelbar über das Verbindungsmittel übertragen werden. Anhand des Verbindungsmittels kann an der Stoßstelle auch ein Formschluss der Profilleisten erreicht werden. Ferner ist es möglich, in Erstreckungsrichtung des Verbindungsmittels wirkende Normalkräfte unmittelbar von der einen Profilleiste auf die andere zu übertragen.

Im Falle der Bildung des mindestens einen Haltelements mittels einer Schwalbenschwanz-Halteeinrichtung ist lediglich der Kraft- und Formschluss an der Schwalbenschwanz-Halteeinrichtung notwendig. Jedoch ist zusätzlich auch ein Formschluss über die Stege und Schenkel möglich.

Ferner ist für das mindestens eine Verbindungselement bevorzugt, wenn dieses lösbar an der mindestens einen Halteeinrichtung befestigbar ist.

Dies ist deshalb von Vorteil, da im Falle einer zunächst nicht korrekten Installation eines Verbindungsmittels in der mindestens einen Halteeinrichtung das Verbindungsmittel wieder gelöst und anschließend erneut befestigt werden kann. Auch kann die Fußbodenprofilanordnung so mehrfach verwendet werden.

Hierbei ist es auch von Vorteil eine Neuplatzierung des Verbindungsmittels per Hand innerhalb der Halteeinrichtung zu ermöglichen. Dies wird bevorzugterweise durch Fertigungstoleranzen bei der Formgebung der Profilleiste und der Verbindungsmittel eingestellt. Hier kann leicht die Art der Passung bestimmt werden, so dass eine notwendige Haltekraft erreicht wird. Damit verbunden ist auch die Kraft, die zur Installation des Verbindungsmittels in die Profilleiste notwendig ist.

Für einen besseren Halt des Verbindungsmittels innerhalb einer Halteeinrichtung ist es von Vorteil, wenn die mindestens eine Haltevorrichtung eine Profilierung aufweist.

Diese Profilierung kann ähnlich einem Raster, bestehend aus vielen kleinen Erhebungen und Vertiefungen, auf der Oberfläche der Schenkel und/oder Stege ausgebildet sein.

Diese Ausbildung ist günstig für das Lösen des Verbindungsmittels per Hand aus der Halteeinrichtung, da aufgrund der Reduzierung der Anlagefläche zwischen Verbindungsmittel und Halteeinrichtung ein geringeres Maß an Kraft zu überwinden ist. Ferner kann durch die Profilierung das eingedrückte Verbindungsmittel in Profillängsrichtung wieder ausgeschoben bzw. der Anbringungsort bestimmt werden. Auch eine Installation durch ein Einschieben in Längsrichtung des Profils kann somit gewährleistet werden.

Ferner ist es auch möglich, dass das mindestens eine Verbindungsmittel ausgebildet ist, in die Profilierung einzugreifen. Folglich wird die Kontaktfläche zwischen Verbindungsmittel und Halteeinrichtung erhöht und somit können größere Kräfte über das Verbindungsmittel übertragen werden. Ferner wirkt eine Profilierung der Halteeinrichtung an den Stegen bzw. Schenkeln und an dem mindestens einen Verbindungsmittel dem ungewollten Lösen der Verbindungsmittels aus der Halteeinrichtung entgegen.

Für die Installation eines Zusammenbaus, bestehend aus zwei Profilleisten, mit einem Verbindungsmittel ist es von Vorteil, wenn die Profilleiste zusammen mit dem mindestens einen Verbindungsmittel unterseitig eine bündige Abschlussfläche bildet. Hierbei bedeutet unterseitig an der dem Fußboden zugewandten Seite der Fußbodenprofilanordnung. Dieser bündige Abschluss gewährleistet das maximale Maß an Flächenkontakt zwischen den beiden Profilleisten und dem Verbindungsmittel, so dass ein Maximalmaß an Kräften und Biegemomenten übertragen werden kann.

Bei einer alternativen Ausbildung kann das mindestens eine Verbindungsmittel auch mindestens eine Sollbruchstelle aufweisen, die es ermöglicht die Länge des Verbindungsmittels auf äußere Gegebenheiten anzupassen.

Auch ist es möglich, dass mindestens eine Haltevorrichtung für das mindestens eine Verbindungsmittel einen die Verschieblichkeit in Längsrichtung begrenzenden Anschlag aufweist.

Der Vorteil eines in Längsrichtung begrenzenden Anschlags bietet nicht nur die Einstellung der optimalen Länge innerhalb der Profilleiste zur Übertragung von Kräften und Momenten auf die sich anschließende Profilleiste, sondern auch den Vorteil einer Vermeidung einer Fehlinstallation des Verbindungsmittels innerhalb der Halteeinrichtung. Die Einlegestelle des mindestens einen Verbindungsmittels ist festgelegt, eine Fehlmontage ist ausgeschlossen.

Bei einer alternativen Ausbildung ist es vorteilhaft, wenn das mindestens eine Verbindungsmittel mit der mindestens einen Halteeinrichtung verklebt ist.

Vorteilhaft an dieser Ausgestaltung ist eine korrekte unveränderbare Vormontage des Verbindungsmittels innerhalb der Halteeinrichtung ab Werk sowie eine Vermeidung einer Fehlinstallation des Verbindungsmittels in der Profilleiste bzw. in der Halteeinrichtung. Ferner ist es damit möglich, den Produktionsaufwand und somit die Produktionskosten zu reduzieren, da die Fertigungstoleranzen für eine solche Verbindungsart deutlich geringer sind.

Günstigerweise weist das Verbindungsmittel und/oder die Profilleiste und/oder die Halteeinrichtung mindestens eine Aussparung zur Aufnahme von Klebemitteln auf. Vorteilhaft an einer solchen Ausgestaltung ist das Einfließen flüssigen Klebers in diese Aussparungen, wobei das erhärtete Klebemittel nicht nur die Kontaktkräfte zwischen Öffnungsmittel und Profilleiste erhöht, sondern auch im erhärteten Zustand einen Haltehaken ausbilden kann.

Einen solchen Haltehaken erhält man bevorzugterweise, indem die Aussparung der Halteeinrichtung die Aussparung des Verbindungsmittels nur zum Teil überlappt, so dass es dem Klebemittel möglich ist, im erhärteten Zustand einen Haken zu bilden, dessen eines Ende innerhalb der Halteeinrichtung und dessen anderes Ende innerhalb der Aussparung im Verbindungsmittel angeordnet ist.

Ferner können diese Aussparungen der optischen Positionskontrolle der korrekten Anbringung der Verbindungsmittel innerhalb der Profilleiste dienen. Somit wird dem Monteur die korrekte Anbringung des Verbindungsmittels erleichtert.

Das mindestens eine Verbindungselement ist bevorzugterweise quaderförmig ausgebildet, wobei die Aussparung auf der im Verhältnis größeren Quaderseite im Kontakt zur Halteeinrichtung steht.

Durch die Quaderform ist eine einfache und zweifelsfreie Installation zwischen Verbindungsmittel und Halteeinrichtung möglich. Hierbei ist es besonders günstig, wenn die größte Quaderfläche bzw. größte Quaderseite in Kontakt zur Halteeinrichtung steht, denn auf diese Art und Weise können Spannungsspitzen bei der Übertragung von Kräften entlang einer großen Fläche reduziert werden. Gleichzeitig wird die Reibhaftung zwischen Verbindungsmittel, Profilleiste und dazwischen eingebrachtem Klebemittel maximiert.

Bei einer weiteren bevorzugten Ausgestaltung kann das Verbindungsmittel außenseitig eine Klebefolie aufweisen. Mittels der Klebefolie wird dem Monteur bei der Installation des Verbindungsmittels in die Halteeinrichtung der Profilleiste der zusätzliche Umgang mit Klebemitteln erspart, wobei derselbe Effekt wie mit Klebemitteln erzielt wird.

Bevorzugterweise ist das Verbindungsmittel aus Kunststoff oder Hartgummi gebildet. Dies bietet den Vorteil einer einfachen und kostengünstigen Produktion mittels Spritzguss- oder Gussverfahrens sowie einer Schalldämpfung entlang der Fußbodenleiste in sich.

Speziell in der Ausbildung des Verbindungsmittels aus Hartgummi kann eine besonders gute Dämpfeigenschaft für Vibrationen und Schall innerhalb einer Fußbodenprofilanordnung erreicht werden.

Die oben genannten Merkmale sind beliebig kombinierbar, solange sie technisch nicht im Widerspruch stehen. So ist es zum Beispiel auch möglich, dass das Verbindungsmittel und/oder die Halteeinrichtung so ausgebildet sind, dass sowohl eine Klebefolie und als auch eine Profilierung vorgesehen sind. Somit können Kräfte auf der einen Seite entlang einer glatten verklebten Oberfläche und auf der anderen Seite Momente senkrecht zur Profilierung sicher übertragen werden.

Weitere Merkmale, Vorteile und Ausführungsvarianten der Erfindung sind Gegenstand der nachfolgenden Beschreibung und der zeichnerischen Darstellung von Ausführungsbeispielen.

### Kurzbeschreibung der Figuren

Die Erfindung wird nachfolgend anhand der Figuren näher erläutert. Es zeigen:
- Fig. 1A: eine Fußbodenprofilanordnung in einer ersten Ausführungsform,
- Fig. 1B: eine Fußbodenprofilanordnung in einer Ausführungsform als Winkelprofil;
- Fig. 2: eine Fußbodenprofilanordnung bzw. ein Rampenprofil in einer Ansicht von unten,
- Fig. 3: eine Fußbodenprofilanordnung ähnlich wie Fig. 1 in einer weiteren Ausführungsform;
- Fig. 4: Ausführungsformen von Verbindungsmitteln,
- Fig. 5: eine Fußbodenprofilanordnung im Wesentlichen gemäß Fig. 2 in einer weiteren Ausführungsform, und
- Fig. 6: eine Ansicht von unten auf eine Fußbodenprofilanordnung in einer weiteren Ausführungsform.

### Beschreibung der Figuren

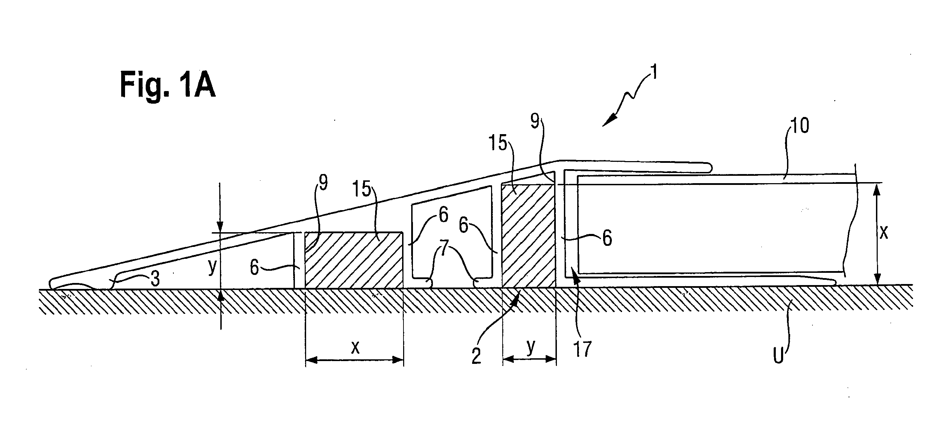

Fig. 1A zeigt eine Fußbodenprofilanordnung in der Seitenansicht und in Ausgestaltung einer Profilleiste als Rampenprofil.

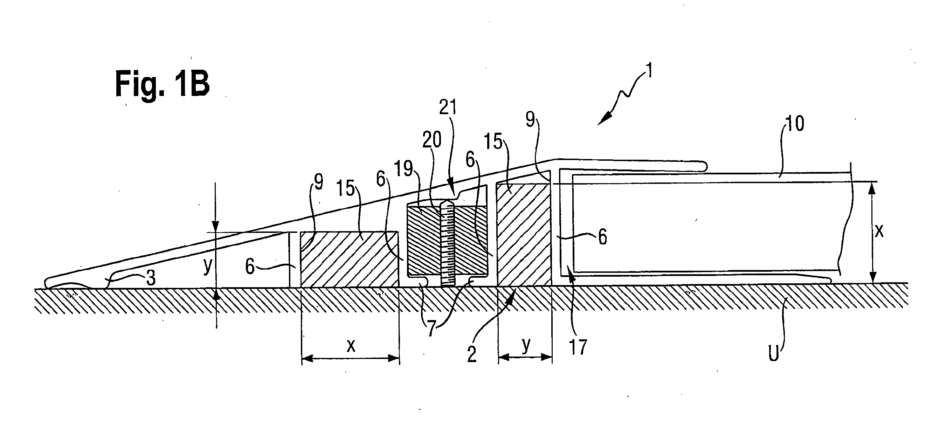

Das Rampenprofil weist zwei Seiten auf, von denen sich die obere schräg nach oben und die untere parallel zum Untergrund U erstreckt. Am äußeren seitlichen Rand weist das Rampenprofil eine sich gegen den Boden stützende Auflage 3 auf, die durch das Auftreten von Personen entstehende Kräfte abstützt. Im weiteren Verlauf in horizontaler Richtung wird die Oberseite des Rampenprofils kontinuierlich schräg bis zu einem Knick in die Waagerechte fortgeführt. Nach dem Knick erstreckt sich die waagerechte Fortsetzung soweit in Richtung eines sich anschließenden Bodenbelags 10, dass eine Fuge 17 zwischen Bodenbelag 10 und Profilleiste 1 sicher überdeckt wird. Wie in Figur 1 dargestellt, ist die waagerechte Fortsetzung zum Untergrund U hin geneigt. Dies gewährleistet zum einen eine kleinere Fuge 17 zwischen der Fortsetzung und dem Bodenbelag 10 und zum anderen einen sicheren Halt durch Klemmung des Bodenbelags.

Die Profilunterseite weist einen mehrfach unterbrochenen Verlauf auf, wobei sie sich weiter als die waagrechte Fortsetzung der Oberseite in Richtung des Bodenbelags erstreckt. Somit wird eine Fläche als Befestigungsmöglichkeit auf dem Untergrund für z. B. Schrauben und/oder Klebemittel (nicht dargestellt) zur Verfügung gestellt.

Zur Abstützung von Kräften, die auf die Oberseite der Profilleiste 1 durch auftretende Personen verursacht werden, und zur Aufnahme von Verbindungsmitteln 15 erstrecken sich zwei Halteeinrichtungen 2 in vertikaler Richtung von der Oberseite zur Unterseite bzw. zum Untergrund U. Die Halteeinrichtungen 2 sind jeweils aus zwei Stegen 6 gebildet, die parallel zueinander und senkrecht zum Untergrund U orientiert sind.

Die Stege 6 im Mittelbereich weisen ferner sich horizontal erstreckende Schenkel 7 auf. Somit bilden die Stege 6 mit den Schenkeln 7 eine L-Form, wobei die Schenkel 7 eine flächige Auflage zum Untergrund gewährleisten. Mittels dieser vorteilhaften Ausgestaltung können Druckkräfte vermindert bzw. flächig an den Untergrund U weitergeleitet werden.

Jeweils zwischen den Stegen 6 sind Halteflächen 9 ausgebildet, um ein Verbindungsmittel 15 zu halten. Die Schenkel 7 sind so orientiert, dass der Vorsatz des L von dem gehaltenen Verbindungsmittel 15 weg zeigt. Somit wird ein ungestörtes Einschieben des Verbindungsmittels aus Längsrichtung L oder von der Unterseite zwischen zwei Halteflächen 9 ermöglicht. Die Passung von Halteflächen 9 und Verbindungsmitteln 15 ist so ausgebildet, dass die Verbindung kraft- und formschlüssig ist. Ferner sind die Verbindungsmittel 15 lösbar an der mindestens einen Halteeinrichtung 2 befestigt. Fig. 1 zeigt zudem, dass die Profilleiste 1 zusammen mit den Verbindungsmitteln 15 unterseitig eine bündige Abschlussfläche bildet. Somit können alle auf die Profilleiste 1 wirkenden Kräfte und Momente auf das Verbindungsmittel 15 bzw. auf eine sich anschließende Profilleiste übertragen werden. Desweiteren wird durch den bündigen Abschluss ein Kippen der Profilleiste um die Halteeinrichtung 2 vermieden.

Der dem Bodenbelag 10 zugewandte Steg 6 kann auf der Unterseite des Bodenbelags 10 am Untergrund U fortgeführt werden (wie abgebildet).

Die Verbindungsmittel 15 sind geschnitten dargestellt und weisen in vertikaler und horizontaler Richtung identische Maße (x, y) auf, wobei das eine Verbindungsmittel 15 horizontal angeordnet ist und das andere vertikal. Aufgrund der identischen Maße ist es möglich, beide Mittel miteinander zu vertauschen. Dies stellt geringe Produktionskosten sicher, da dasselbe Verbindungsmittel 15 verwendet werden kann. Die Verbindungsmittel 15 sind vorzugsweise aus Hartgummi oder Kunststoff. Hartgummi bietet hierbei den Vorteil einer besonders guten Dämpfeigenschaft für Vibrationen und Schall innerhalb einer Fußbodenprofilanordnung.

In einem aus Stegen 6 und Schenkeln 7 gebildeten Hohlraum können ebenfalls Verbindungsmittel wie beispielsweise ein Winkelverbinder oder dergleichen eingebracht werden, jedoch müssen diese seitlich aus Längsrichtung L eingeschoben werden. Bei einer solchen Verbindungsmethode können die eingeschobenen Verbindungsmittel geklebt, und/oder genietet und/oder geschraubt an der Profilleiste 1 befestigt sein.

Beim linken Ausführungsbeispiel einer Halteeinrichtung 2 mit einem Verbindungsmittel 15 wird gezeigt, wie im Vergleich zum rechten Ausführungsbeispiel der Spalt zwischen der Oberkante des Verbindungsmittels 15 und der Oberseite der Profilleiste 1 geschlossen werden kann. Ein Verschluss des Spalts wird erreicht, indem die Halteeinrichtung 2 eine Form aufweist, die exakt auf die der Verbindungsmittel abgestimmt ist. Somit können höhere Kräfte und größere Momente von einer Profilleiste auf eine andere mittelbar über Verbindungsmittel 15 übertragen werden.

Fig. 1B zeigt eine Schnittansicht einer Profilleiste 1 in einer Ausführungsform als Winkelprofil. Zusätzlich zu den Merkmalen aus Fig. 1A weist diese Ausführung einen Winkelverbinder 19 auf, der zwischen den Stegen 6 verläuft und oberhalb der Schenkel 7 eingebracht ist. Der Winkelverbinder 19 ist vorzugsweise aus Aluminium und weist in regelmäßigen Abständen Bohrungen mit Gewinde auf, in die Schrauben 20 als Befestigungsmittel eingeschraubt sind. Ferner ist an der Profilleiste 1 als ein Mittel, das der Schraube 20 eine ebene Anlagefläche bietet, ein sich in Längsrichtung erstreckender Wulst 21 ausgebildet. Ohne den Wulst 21 würde sich die Schraube 20 beim Anlegen an die Schräge der rampenförmigen Profilleiste 1 verkanten. Bei Winkelprofilen sind die Winkelverbinder 19 ab Werk eingebracht und können wie auch die Verbinder 15 teilweise über die Schnittkanten hervorstehen und somit die positive Wirkung der Verbinder 15 verstärken. Die Schrauben 20 erstrecken sich vertikal im Wesentlichen über die gesamte Höhe der Profilleiste. Beim Anziehen der Schrauben 20 stützt sich der Winkelverbinder 19 an den Schenkeln 7 ab und ermöglicht ein bündiges Aneinanderliegen der Schnittkanten.

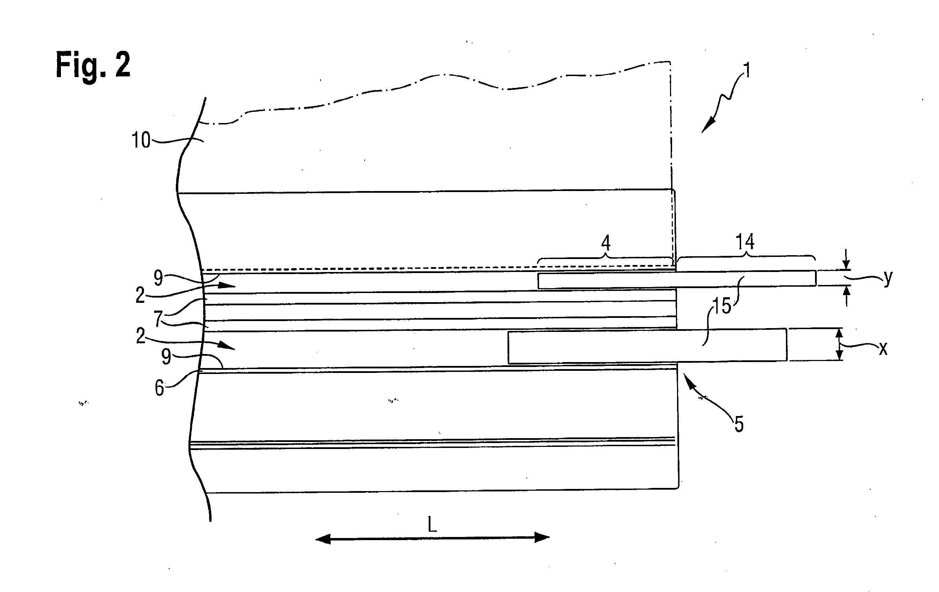

Fig. 2 zeigt eine Unteransicht der Profilleiste 1 aus Fig. 1, wobei die Profilleiste 1 zwei Halteeinrichtung 2 aufweist, durch die jeweils ein erster Teilabschnitt 4 des Verbindungsmittels 15 gehalten ist, wobei ein zweiter Teilabschnitt 14 des Verbindungsmittels 15 über einen Randbereich 5 der Profilleiste 1 in Längsrichtung L zur Verbindung mit einer weiteren Profilleiste (nicht gezeigt) hervorsteht.

Die beiden Verbindungsmittel 15 weisen eine identische Form, also Länge, Höhe und Breite, auf, sind jedoch unterschiedlich orientiert, nämlich ist das eine Verbindungsmittel 15 vertikal und das zweite horizontal angeordnet. Ferner sind beide Verbindungsmittel unterschiedlich weit innerhalb der Profilleiste 1 bzw. innerhalb dem Rampenprofil angeordnet. Die Lage beider Mittel 15 kann in Längsrichtung durch Herausnehmen und Einstecken per Hand verändert werden.

Wie Fig. 2 ebenfalls zeigt, wird der erste Teilabschnitt 4 der Verbindungsmittel 15 von einer Halteeinrichtung 2 bestehend aus Stegen 6 gebildet und stellt Halteflächen 9 zum Halten des Verbindungsmittels 15 bereit. Die Halteeinrichtung 2 bildet mit ihren Stegen 6 einen Kanal, der sich in Längsrichtung der Profilleiste 1 vom Randbereich 5 zu einem weiteren Randbereich (nicht dargestellt) erstreckt. Dementsprechend wird das Verbindungsmittel 15 kraft- und formschlüssig von der Halteeinrichtung 2 umgriffen. Damit ein Kraft- und Formschluss erreicht wird, wird das Verbindungsmittel 15 in Längsrichtung vom Randabschnitt 5 in die Halteeinrichtung 2 eingeschoben, oder aber von der Unterseite eingedrückt.

Auch dargestellt ist ein Bodenbelag 10 im Eingriff zwischen beiden Seiten des Rampenprofils.

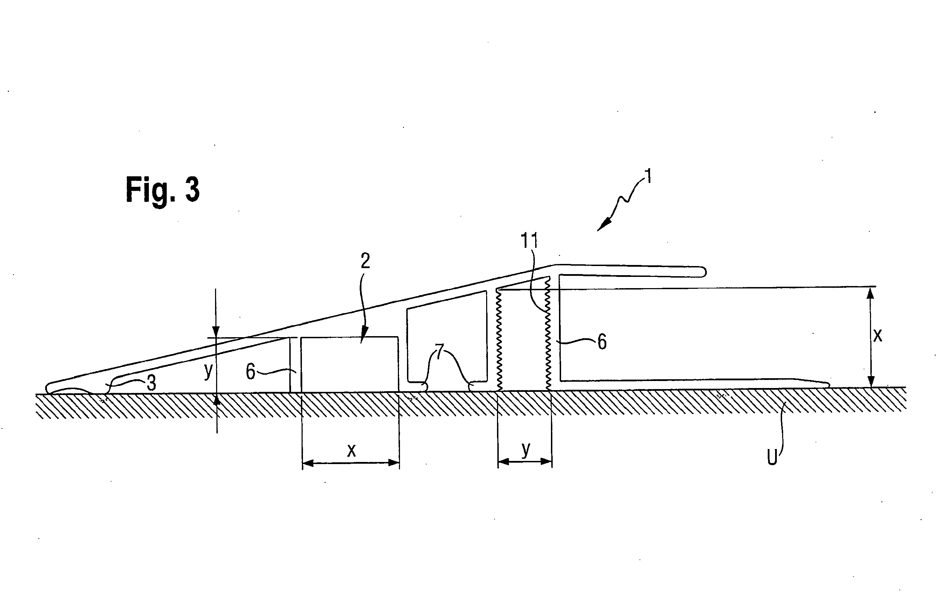

Fig. 3 zeigt im Wesentlichen die Merkmale aus Fig. 1, jedoch ohne Verbindungsmittel 15 und ohne Bodenbelag 10. Stattdessen ist anstelle der Halteflächen 9 eine Profilierung 11 ausgebildet. Die Profilierung 11 weist eine Art Raster auf und ist nur an der rechten Halteeinrichtung 2 ausgebildet. Auch an der zweiten Halteeinrichtung kann eine derartige Profilierung vorgesehen sein. In der dargestellten Ausführungsform erstreckt sich das Raster vom Untergrund U über die gesamte Länge bzw. Höhe des Stegs 6 und des Schenkels 7. Eine solche Ausbildung ist nicht zwingend notwendig, ebenso kann das Raster vom Ende und/oder auch vom Beginn eines Stegs 6 und/oder eines Schenkels abgesetzt sein, sodass sich z. B. nur in mittiger Höhenlage ein Raster ergibt.

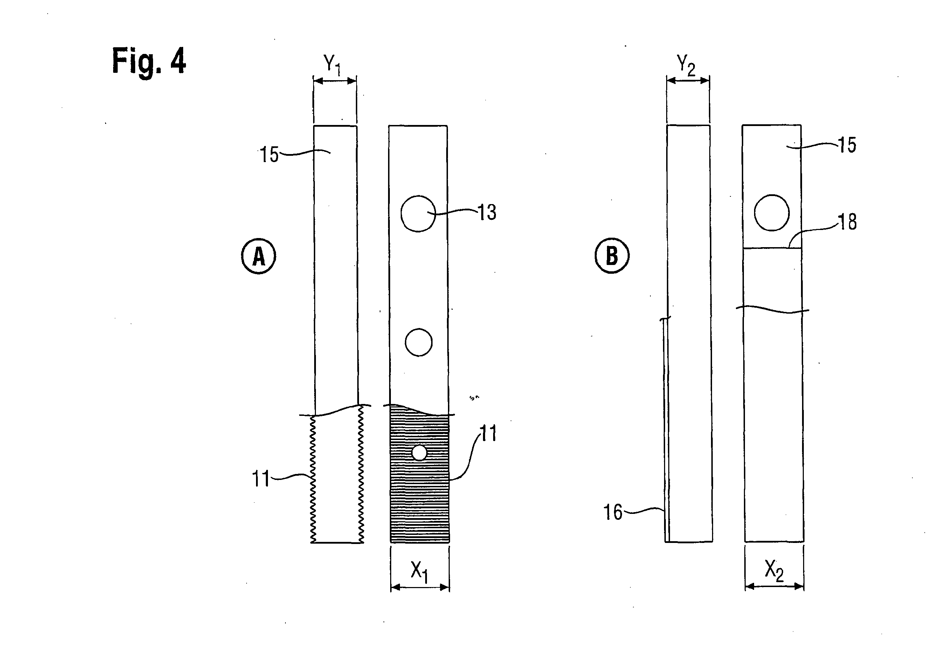

In Fig. 4 sind zwei Ausführungsvarianten von Verbindungsmitteln 15 dargestellt, welche identische Höhen und Breiten (X1=X2), jedoch unterschiedliche Dicken (Y1, Y2) aufweisen.

Durch die Quaderform ist eine einfache Installation zwischen Verbindungsmittel 15 und Halteeinrichtung 2 möglich, ohne dass Zweifel bestehen, welches Verbindungsmittel 15 wo zu montieren ist. Somit können Spannungsspitzen bei der Übertragung von Kräften entlang einer großen Fläche reduziert werden, wobei die Reibhaftung zwischen Verbindungsmittel 15, Profilleiste 1 und eventuell dazwischen eingebrachtem Klebemittel maximiert werden kann.

So zeigt Variante A sowohl ein Verbindungsmittel 15 mit ebener, glatter Oberfläche als auch eines mit einer Profilierung 11. Somit wird ein Kraft- und Formschluss über der Profilierung 11 auf dem Verbindungsmittel 15 und der Profilleiste 1 noch besser gewährleistet, da nun die Profilleiste 1 in die Profilierung 11 des Verbindungsmittels eingreifen kann.

Desweiteren sind alle Verbindungsmittel 15 auf der im Verhältnis größeren Quaderseite angeordnet und mit unterschiedlich geformten Aussparungen 13 zur Aufnahme von Klebemitteln ausgestattet. Dies birgt den Vorteil in sich, dass Klebemittel (nicht dargestellt) in den Aussparungen angebracht werden kann und das Verbindungsmittel 15 mit der Halteeinrichtung 2 verklebbar ist. Somit kann werkseitig eine korrekte unveränderbare Vormontage von Verbindungsmitteln innerhalb der Halteeinrichtung sowie eine Vermeidung einer Fehlinstallation des Verbindungsmittels 15 in der Profilleiste 1 bzw. in der Halteeinrichtung 2 erreicht werden. Ferner ist es damit möglich, den Produktionsaufwand und somit die Produktionskosten zu reduzieren, da die Fertigungstoleranzen für eine solche Verbindungsart geringer sind. Die Aussparungen 13 dienen auch als Raum zum Materialausgleich, wenn die Verbindungsmittel 15 elastisch verformt werden.

Bei einer weiteren bevorzugten Ausgestaltung nach Variante B weist das Verbindungsmittel 15 außenseitig eine Klebefolie auf. Mittels der Klebefolie wird bei der Installation des Verbindungsmittels 15 mit der Halteeinrichtung 2 der Profilleiste 1 der zusätzliche Umgang mit Klebemitteln vermieden, wobei derselbe Effekt wie mit Klebemitteln erzielt wird.

Ebenfalls in Fig. 4, Variante B dargestellt, ist eine Sollbruchstelle 18. Mithilfe dieser kann das Verbindungselement 15 auf einfache Weise in der Länge gekürzt werden. Anstelle der dargestellten kreisrunden Aussparungen 13 sind sowohl gedrehte rechteckige Aussparungen als auch ovale mit unterschiedlichen Orientierungen auf dem Verbindungsmittel möglich. Variante A zeigt verschiedene Größen runder Aussparungen 13. Alle genannten Formvarianten schaffen unterschiedliche Kontaktflächen zur Profilleiste und bedürfen unterschiedlicher Mengen an Klebemitteln. Die Größe der Aussparungen 13 hängt von der Größe der Profilleisten und der Verbindungsmittel ab.

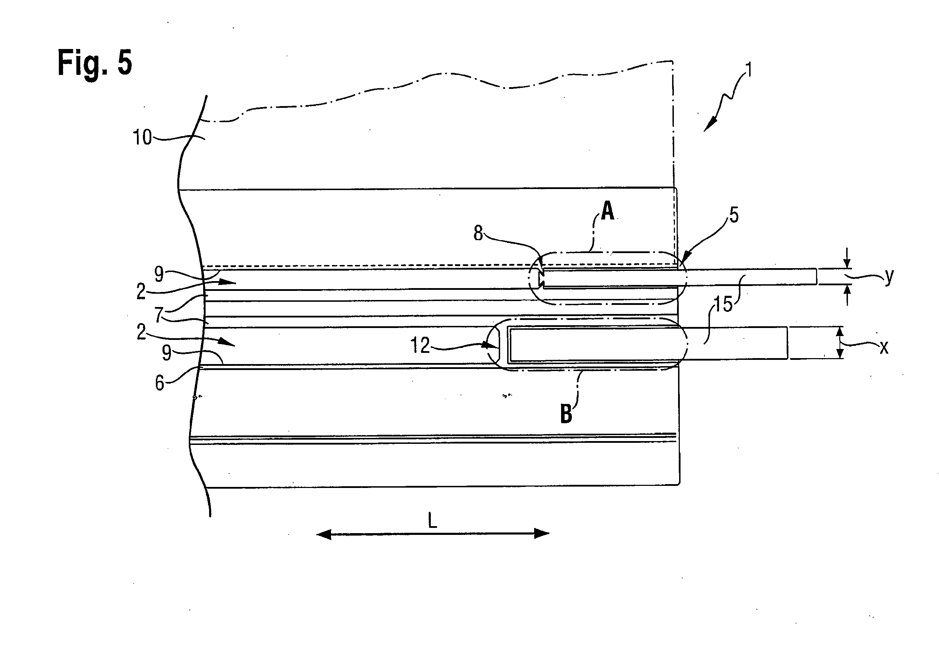

Fig. 5 zeigt im Wesentlichen die Merkmale aus Fig. 2, mit dem Unterschied, dass an dem oberen Verbindungsmittel 15 (Ausführung A) am in der Profilleiste 1 eingebrachten Ende eine Schwalbenschwanz-Halteeinrichtung 8 ausgebildet ist und Halteflächen 9 zum Halten des Verbindungsmittels 15 bereitgestellt sind.

Eine derart gestaltete Ausführung der Halteeinrichtung 2 sorgt dafür, dass ein kraft- und formschlüssiger Eingriff bzw. Halt zwischen Verbindungsmittel 15 und Profilleiste 1 sicher gewährleistet wird. Wie in Ausführung B in Fig. 5 gezeigt, ist ein Anschlag 12 vorgesehen, der in der Haltevorrichtung 2 für ein Verbindungsmittel 15 die Verschieblichkeit in Längsrichtung L begrenzt.

In der dargestellten Ausführungsform wird der Anschlag 12 als Verbindungsglied zwischen einem Steg 6 und einem Schenkel 7 gebildet. Hierbei ist das Verbindungsglied so ausgestaltet, dass dieses eine durchgehende Wand vom Untergrund zur Oberseite bildet. Aber auch eine Ausbildung als Steg bzw. in die Halteeinrichtung 2 stehende Nase, die sich nicht vollständig von Oberseite zum Untergrund oder von Steg 6 zu Schenkel 7 erstreckt, ist als alternative Ausführung anwendbar.

Der Vorteil eines in Längsrichtung begrenzenden Anschlags bietet nicht nur die Einstellung der optimalen Länge innerhalb der Profilleiste zur Übertragung von Kräften und Momenten auf die sich anschließende Profilleiste, sondern auch den Vorteil der Vermeidung von Fehlinstallation des Verbindungsmittels innerhalb der Halteeinrichtung.

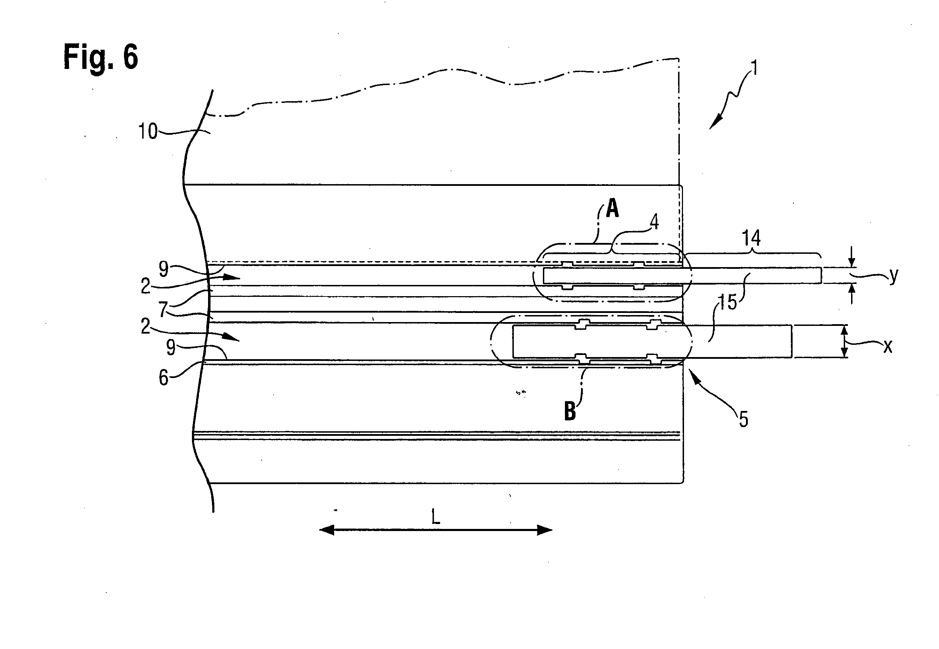

Fig. 6 zeigt ähnlich wie Fig. 2 eine Unteransicht auf eine Profilleiste 1, wobei die Profilleiste 1 zwei Halteeinrichtung 2 aufweist. Hierbei ist jeweils ein erster Teilabschnitt 4 des Verbindungsmittels 15 in der Profilleiste 1 gehalten und ein zweiter Teilabschnitt 14 des Verbindungsmittels 15 steht über den Randbereich 5 in Längsrichtung L hervor.

Die beiden Verbindungsmittel 15 weisen identische Formen auf, wobei beide Verbindungsmittel unterschiedlich weit innerhalb der Profilleiste 1 bzw. innerhalb des Rampenprofils angeordnet sind.

Die Profilleiste 1 weist in Ausführung A Aussparungen auf, die der Aufnahme von Klebemittel (nicht dargestellt) dienen. Somit kann das Verbindungsmittel 15 mit der Halteeinrichtung 2 verklebt und ein Kraftschluss zwischen Verbindungsmittel 15 und Profilleiste 1 geschaffen werden.

Die Ausführung B ist ähnlich der Ausführung A ausgebildet, jedoch besitzt hier auch das Verbindungsmittel 15 Aussparungen zur Aufnahme von Klebemitteln. Die Aussparungen 13 des Verbindungsmittels 15 sind versetzt zu den Aussparungen in der Profilleiste angeordnet. Somit wird für das Klebemittel ein Verbindungskanal zwischen beiden Aussparungen geschaffen, wobei ein zusätzlicher Teil der Haltefläche 9 mit dem Klebemittel in Kontakt kommt. Folglich muss nur einmal Klebemittel in ein Paar von Aussparungen angebracht werden, um diese miteinander und mit den Halteflächen zu verbinden.

Ferner werden durch eine derartige Anordnung des Klebemittels nicht nur die Kontaktkräfte zwischen Öffnungsmittel und Profilleiste erhöht, sondern auch im erhärteten Zustand ein Haltehaken ausgebildet.

Ferner dienen diese Aussparungen zur optischen Positionskontrolle der korrekten Anbringung in Längsrichtung L der Verbindungsmittel 15 innerhalb der Profilleiste 1. Ein Anschlag 12 gemäß Fig. 5, Ausführung B ist dann nicht notwendig.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. So ist es z. B. möglich, dass die Verbindungsmittel mittels einer Schwalbenschwanz-Halteeinrichtung und einer Klebefolie und Klebemitteln in der Halteeinrichtung der Profilleiste gehalten werden. Auch eine Kombination einer Profilierung auf einer Seite eines Verbindungsmittels und einer glatten Oberfläche auf der anderen Seite ist möglich.

### Bezugszeichenliste

- 1: Profilleiste
- 2: Halteeinrichtung
- 3: Auflage
- 4: Erster Teilabschnitt
- 5: Randbereich
- 6: Steg
- 7: Schenkel
- 8: Schwalbenschwanz-Halteeinrichtung
- 9: Halteflächen
- 10: Bodenbelag
- 11: Profilierung
- 12: Anschlag
- 13: Aussparrung
- 14: Zweiter Teilabschnitt
- 15: Verbindungsmittel
- 16: Klebefolie
- 17: Fuge
- 18: Sollbruchstelle
- 19: Winkelverbinder
- 20: Befestigungsmittel
- 21: Mittel (Wulst)
- L: Längsrichtung
- U: Untergrund

## Patentansprüche

1. Fußbodenprofilanordnung, insbesondere zur Festlegung von Fußbodenbelägen (10), umfassend mindestens eine Profilleiste (1), die mindestens eine Halteeinrichtung (2) aufweist, durch die ein erster Teilabschnitt (4) eines Verbindungsmittels (15) gehalten ist, wobei ein zweiter Teilabschnitt (14) des Verbindungsmittels (15) über einen Randbereich (5) der Profilleiste (1) in Längsrichtung (L) zur Verbindung mit einer weiteren Profilleiste (1) hervorsteht, wobei zwei Halteeinrichtungen (2) vorgesehen sind, die jeweils ein Verbindungsmittel (15) haltern, **dadurch gekennzeichnet, dass** die Verbindungsmittel (15) eine identische Form aufweisen, die quaderförmig mit ungleichlangen Quaderseiten ausgebildet ist, und das erste Verbindungsmittel (15) vertikal und das zweite horizontal angeordnet ist.

2. Fußbodenprofilanordnung nach Anspruch 1 ausgebildet als Winkelprofil mit einem Winkelverbinder (19), **dadurch gekennzeichnet, dass** der Winkelverbinder (19) mindestens zwei Profilleisten (1) in einem vordefinierten Winkel formschlüssig verbindet.

3. Fußbodenprofilanordnung nach mindestens einem der vorigen Ansprüche, **dadurch gekennzeichnet, dass** die mindestens eine Halteeinrichtung (2) aus Stegen (6) und/oder Schenkeln (7) und/oder einer Schwalbenschwanz-Halteeinrichtung (8) gebildet ist und Halteflächen (9) zum Halten des mindestens einen Verbindungsmittels (15) bereitstellt.

4. Fußbodenprofilanordnung nach mindestens einem der vorigen Ansprüche, **dadurch gekennzeichnet, dass** die mindestens eine Halteeinrichtung (2) das mindestens eine Verbindungsmittel (15) kraft- und formschlüssig umgreift.

5. Fußbodenprofilanordnung nach mindestens einem der vorigen Ansprüche, **dadurch gekennzeichnet, dass** das mindestens eine Verbindungsmittel (15) lösbar an der mindestens einen Halteeinrichtung (2) befestigbar ist.

6. Fußbodenprofilanordnung nach einem der vorigen Ansprüche, **dadurch gekennzeichnet, dass** die mindestens eine Halteeinrichtung (2) mindestens eine Profilierung (11) aufweist und das mindestens eine Verbindungsmittel (15) ausgebildet ist, in die Profilierung (11) einzugreifen.

7. Fußbodenprofilanordnung nach mindestens einem der vorigen Ansprüche, **dadurch gekennzeichnet, dass** die Profilleiste (1) zusammen mit dem mindestens einen Verbindungsmittel (15) unterseitig eine bündige Abschlussfläche bildet.

8. Fußbodenprofilanordnung nach mindestens einem der vorigen Ansprüche **dadurch gekennzeichnet, dass** die mindestens eine Haltevorrichtung (2) für das mindestens eine Verbindungsmittel (15) einen die Verschieblichkeit in Längsrichtung (L) begrenzenden Anschlag (12) aufweist.

9. Fußbodenprofilanordnung nach mindestens einem der Ansprüche 1 - 4 und 6 - 8, **dadurch gekennzeichnet, dass** das mindestens eine Verbindungsmittel (15) mit der mindestens einen Halteeinrichtung (2) verklebt ist.

10. Fußbodenprofilanordnung nach mindestens einem der vorigen Ansprüche, **dadurch gekennzeichnet, dass** das Verbindungsmittel (15) und/oder die Profilleiste (1) und/oder die Halteeinrichtung (2) mindestens eine Aussparung (13) zur Aufnahme von Klebemitteln aufweist.

11. Fußbodenprofilanordnung nach Anspruch 10, **dadurch gekennzeichnet, dass** die Aussparung (13) auf der im Verhältnis größeren Quaderseite in Kontakt zur Halteeinrichtung (2) steht.

12. Fußbodenprofilanordnung nach mindestens einem der Ansprüche 1 - 4 und 6 - 9, **dadurch gekennzeichnet, dass** das Verbindungsmittel (15) außenseitig eine Klebefolie (14) aufweist.

13. Fußbodenprofilanordnung nach mindestens einem der vorigen Ansprüche, **dadurch gekennzeichnet, dass** das Verbindungsmittel (15) aus Kunststoff oder Hartgummi gebildet ist.

## Claims

1. Floor profile arrangement, in particular for securing floor coverings (10), comprising at least one profiled strip (1) which has at least one retaining means (2) which holds a first segment (4) of a joining means (15), wherein a second segment (14) of the joining means (15) projects over a peripheral region (5) of the profiled strip (1) in the longitudinal direction (L) to join with a further profiled strip (1), wherein two retaining means (2) are provided which hold a respective joining means (15), **characterized in that** the joining means (15) have an identical shape which is a cuboid having differing side lenghts, and the first joining means (15) being arranged vertically and the second being arranged horizontally.

2. Floor profile arrangement according to claim 1. configured as an angle profile with an angle joint (19), **characterised in that** the angle joint (19) positively joins at least two profiled strips (1) at a predefined angle.

3. Floor profile arrangement according to at least one of the preceding claims, **characterised in that** the at least one retaining means (2) is formed from webs (6) and/or legs (7) and/or a dovetail retaining means (8) and provides retaining surfaces (9) for holding the at least one joining means (15).

4. Floor profile arrangement according to at least one of the preceding claims, **characterised in that** the at least one retaining means (2) engages around the at least one joining means (15) in a non-positive and positive manner.

5. Floor profile arrangement according to at least one of the preceding claims, **characterised in that** the at least one joining means (15) can be attached to the at least one retaining means (2) such that it can be removed therefrom.

6. Floor profile arrangement according to any one of the preceding claims, **characterised in that** the at least one retaining means (2) has at least one profiling (11) and the at least one joining means (15) is configured to engage in the profiling (11).

7. Floor profile arrangement according to at least one of the preceding claims, **characterised in that** the profiled strip (1) together with the at least one joining means (15) forms a flush end surface on the lower side.

8. Floor profile arrangement according to at least one of the preceding claims, **characterised in that** the at least one retaining means (2) has for the at least one joining means (15) a stop (12) which restricts displaceability in the longitudinal direction (L).

9. Floor profile arrangement according to at least one of claims 1 to 4 and 6 to 8, **characterised in that** the at least one joining means (15) is adhesively bonded to the at least one retaining means (2).

10. Floor profile arrangement according to at least one of the preceding claims, **characterised in that** the joining means (15) and/or the profiled strip (1) and/or the retaining means (2) has at least one recess (13) for receiving adhesives.

11. Floor profile arrangement according to claim 12, **characterised in that** the recess (13) on the relatively larger side of the cuboid is in contact with the retaining means (2).

12. Floor profile arrangement according to at least one of claims 1 to 4 and 6 to 9, **characterised in that** the joining means (15) has an adhesive film (14) on the outside.

13. Floor profile arrangement according to at least one of the preceding claims, **characterised in that** the joining means (15) is formed from plastics material or hard rubber.

## Revendications

1. Agencement de profilés de sol, en particulier pour fixer des revêtements de sol (10), comprenant au moins une bande profilée (1) qui comporte au moins un moyen de retenue (2) qui maintien une premier partie (4) d'un moyen de connexion (15), dans lequel une deuxième partie (14) du moyen de connexion (15) fait saillie sur une région périphérique (5) de la bande profilée (1) dans la direction longitudinale (L) pour la connexion à une autre bande profilée (1), dans lequel deux des moyens de retenue (2) sont prévus qui maintiennent un moyen de connexion respectifs (15), **caractérisé en ce que** les moyens de connexion (15) ont une forme identique, qui est en forme cuboïde ayant différentes longueurs latérales, et le premier moyen de connexion (15) étant disposé verticalement et le second étant disposé horizontalement.

2. Agencement de profilés de sol selon la revendication 1, configuré comme une cornière avec un joint d'angle (19), **caractérisé en ce que** le joint d'angle (19) se joint positivement au moins deux bandes profilées (1) selon un angle prédéfini.

3. Agencement de profilés de sol selon au moins l'une des revendications précédentes, **caractérisé en ce que** le au moins un moyen de retenue (2) est formé à partir de bandes (6) et / ou des jambes (7) et / ou une queue d'aronde (8) et fournit des surfaces de retenue (9) pour maintenir le au moins un moyen de connexion (15).

4. Agencement de profilés de sol selon au moins l'une des revendications précédentes, **caractérisé en ce que** le au moins un moyen de retenue (2) entoure au moins une des moyens de connexion (15) d'une manière à être solidaire et à forme finale.

5. Agencement de profilés de sol selon au moins l'une des revendications précédentes, **caractérisé en ce que** l'au moins un moyen de connexion (15) peuvent être fixé amovible à au moins un moyen de retenue (2).

6. Agencement de profilés de sol selon l'une quelconque des revendications précédentes, **caractérisé en ce que** l'un moyens de retenue comprend au moins un profilage (11) et le au moins moyen de connexion (15) est configurée pour s'engager dans le profilage (11).

7. Agencement de profilés de sol selon au moins l'une des revendications précédentes, **caractérisé en ce que** la bande profilée (1) avec l'au moins un moyen de connexion (15) forme une surface d'extrémité affleurant sur la face inférieure.

8. Agencement de profilés de sol selon au moins l'une des revendications précédentes, **caractérisé en ce que** l'au moins un moyens de retenue (2) comprend une butée (12) pour l'au moins une des moyens de connexion (15) qui limite la possibilité de déplacement dans la direction longitudinale (L).

9. Agencement de profilés de sol selon au moins l'une des revendications 1 à 4 et 6 à 8, **caractérisé en ce que** l'au moins une des moyens de connexion (15) est collée à au moins une des moyens de retenue (2).

10. Agencement de profilés de sol selon au moins l'une des revendications précédentes, **caractérisé en ce que** les moyens de connexion (15) et / ou la bande profilée (1) et / ou les moyens de retenue (2) présente au moins un évidement (13) pour recevoir des adhésifs.

11. Agencement de profilés de sol selon la revendication 12, **caractérisé en ce que** l'évidement (13) est en contact avec les moyens de retenue (2) sur le côté relativement plus grande du cuboïde.

12. Agencement de profilés de sol selon au moins l'une des revendications 1 à 4 et 6 à 9, **caractérisé en ce que** les moyens de connexion (15) comporte un film adhésif (14) sur l'extérieur.

13. Agencement de profilés de sol selon au moins l'une des revendications précédentes, **caractérisé en ce que** le moyen de connexion (15) est formé à partir de matière plastique ou de caoutchouc dur.
